Europäisches Patentamt

European Patent Office

Office européen des brevets

(19)

(11) **EP 1 395 851 B1**

(12) **EUROPEAN PATENT SPECIFICATION**

(45) Date of publication and mention
of the grant of the patent:
**19.07.2006 Bulletin 2006/29**

(51) Int Cl.:
*G01S 13/93* (2006.01)   *G01S 11/12* (2006.01)
*B60K 31/00* (2006.01)

(21) Application number: **02735573.4**

(22) Date of filing: **17.05.2002**

(86) International application number:
**PCT/GB2002/002324**

(87) International publication number:
**WO 2002/092375 (21.11.2002 Gazette 2002/47)**

(54) **SENSING APPARATUS FOR VEHICLES**

ÜBERWACHUNGSVORRICHTUNG FÜR FAHRZEUGE

APPAREIL DE DETECTION POUR VEHICULES

(84) Designated Contracting States:
**DE ES FR GB IT**

(30) Priority: **17.05.2001 GB 0111979**

(43) Date of publication of application:
**10.03.2004 Bulletin 2004/11**

(73) Proprietor: **Lucas Industries Limited
West Midlands B90 4AX (GB)**

(72) Inventors:
• **BUCHANAN, Alastair, James
West Midlands B72 1AL (GB)**
• **OYAIDE, Andrew, Oghenovo
Haymills, Birmingham B10 9JB (GB)**
• **FOO, Tuan, Hoe, Edwin
Singapore 578713 (SG)**

(74) Representative: **Tranter, Andrew David
Barker Brettell,
138 Hagley Road
Edgbaston,
Birmingham B16 9PW (GB)**

(56) References cited:
**EP-A- 0 890 470          US-A- 5 913 375
US-A- 5 926 126**

## Description

This invention relates to improvements in sensing apparatus for vehicles. It in particular but not exclusively relates to a target object position sensing apparatus for a host vehicle that is adapted to estimate the location of a target vehicle or other target object from a range of vehicles or other objects relative to a projected path of a host vehicle. In a further aspect the invention provides an adaptive cruise control system which incorporates such apparatus.

An apparatus according to the preamble of claim 1 is known from EP890 470A2.

In recent years the introduction of improved sensors and increases in processing power have led to considerable improvements in automotive control systems. Improvements in vehicle safety have driven these developments which are approaching commercial acceptance. One example of the latest advances is the provision of adaptive cruise control for vehicles, often referred to as ACC.

Current ACC systems are structured around position sensors which detect the presence of other vehicles and obstacles which are positioned on the road ahead of the host vehicle. The detection is typically performed using one or more radar or lidar based sensors mounted at the front of the host vehicle. The sensors identify the location of detected objects relative to the host vehicle and feed information to a processor. The processor determines whether or not the target object lies in a projected path for the host vehicle.

In an ACC system, the system may search for a target object corresponding to a vehicle travelling in front of the host vehicle along the road and automatically following the identified vehicle. This permits a convoy of vehicles to safely follow one another along a road with little or no intervention from the driver. In this case it is important that only targets that are in the same lane as the host vehicle are followed for obvious reasons. This is particularly relevant on a motorway which has many parallel lanes where it is envisaged that such as system will be of most benefit.

There are several problems inherent in the design of a reliable ACC system.

Where a host vehicle is travelling along a straight road then implementation is trivial. Only targets directly ahead of the vehicle need be tracked. If the road is curved the problem is far from trivial.

In the first generation of ACC systems the identification of the lane in which a preceding target vehicle is travelling is achieved using a combination of radar to detect the position of target objects with yaw sensors located on the host vehicle to determine the trajectory or projected path of the host vehicle. The output of the yaw sensor enables the radius of the projected path of the vehicle to be determined, i.e. the radius along which the host vehicle is travelling at the instant at which measurements are made. The curvature of the path is then projected in front of the vehicle and targets are tracked which lie on the projected path.

However, the performance of these systems is limited as the projection of the current vehicle's instantaneous position only holds true when the host vehicle and the impeding vehicle are following the same radius path. Also, the information that can be obtained from a yaw sensor is typically of low quality which results in poor reliability for the system. This can cause errors in the projected path.

We are aware of the European Patent Application published as EP 0 890 472, which discloses a vehicle control system where a target vehicle is selected on the basis of its path relative to the host vehicle's path. The document forms the pre-characterising portion of claim 1.

An object of the present invention is to ameliorate some of the problems of the prior art.

In accordance with a first aspect the invention provides a target object position sensing apparatus for a host vehicle according to the features of claim 1. In particular the apparatus comprises :

a lane detection apparatus provided on the host vehicle which includes an image acquisition means adapted to capture an image of at least a part of the road ahead of the host vehicle;
a vehicle path estimation means adapted to estimate a projected path for the host vehicle;
a target vehicle detection apparatus located on the host vehicle which is adapted to identify the position of any target objects located on the road ahead of the host vehicle, the position including data representing the distance of the target vehicle from the host vehicle;
first data processing means adapted to determine a target lane in which the host vehicle will be located when it has travelled along the projected path by the distance to the target object;
and second processing means adapted to compare the position of the target vehicle determined by the target vehicle detection means with the position of the target lane to provide a processed estimate of the actual position of the target object, and in which the processed estimate comprises an indicator of whether or not the target vehicle is in the same lane as the host vehicle is projected to be in when at the point of the target vehicle, the processed estimate comprising an indicator whether or not the target vehicle is in the same lane as the host vehicle is projected to be in when at the point of the target vehicle .

Thus, the invention provides for the combination, or fusion, of information from lane detection apparatus and vehicle position detection apparatus to enable the location of an impeding vehicle to be reliably determined.

The use of lane detection eliminates the need for projected path information provided from a yaw sensor by using real identified lane information to estimate the position of a target or impeding vehicle and the host vehicle.

The image acquisition means of the lane detection apparatus may comprise a video camera which is adapted to produce a, or at least one, two-dimensional image of an area of the road in front of the host vehicle. Many images may be captured in sequence over time as the vehicle travels along a road.

The captured image may be passed to an image processing unit. This may filter the or each image to identify artefacts in the image corresponding to one or more of: the right hand edge of a road, the left hand edge of the road, lane markings defining lanes in the road, the radius of curvature of the lane and or the road, and optionally the heading angle of the host vehicle relative to the road/lane. These detected artefacts output from the image processing unit may be passed to the first data processor to determine the path of the host vehicle. The output data may be continuously updated whenever a new image is captured over time.

The image processing unit may be adapted to process the identified road information using one or more image processing algorithms.

In a first stage the image processing unit may be adapted to apply an edge detection algorithm to detect lines or curves that correspond to lane boundaries. The image processing unit may further include a transformation algorithm, such as an inverse perspective algorithm, to convert the edge detected points of the lane boundaries from the image plane to the real world plane.

The image processing unit may also include a tracking algorithm which may employ a recursive least squares technique to identify the path of lanes in the or each processed image.

The output of the image processing unit comprises data representing the lane topography which is passed to the first data processing means. It may also include information including the position of the host vehicle relative to the identified lanes and its heading.

The first data processing means may determine the target lane in several possible ways. Before this can be achieved, however, the vehicle path estimation means must determine a projected path for the vehicle.

The vehicle path estimation means may determine the curvature of a path that the vehicle is expected to follow in several ways. For example, the lane information may be used to determine which lane the host vehicle is presently travelling in and it may be assumed that the host vehicle will remain in that lane. Thus, the projected path may correspond to the path of the lane. It will be assumed to have the same curvature as that lane.

To accommodate the situation where the host vehicle may change lane before it reaches the target vehicle the vehicle path estimation means may estimate the path by projecting a path based upon the heading of the host vehicle. This may coincide with the path of a lane but is actually independent of the lane orientation.

In another arrangement, if a, or the, processed image indicates that the host vehicle is towards the left hand side of a lane and heading left relative to the road the path estimation means may predict that the path of the host vehicle will continue for a short while to stay in that lane but will shortly change to a different lane to the left. A similar prediction may be made for a change to the right.

In a further alternative or in addition the vehicle path estimation means may include a yaw sensor which determines the rate of yaw of the host vehicle to provide a measure of the radius of curvature of the path the host vehicle is following. This can be combined with heading of the vehicle obtained from the captured image.

The first data processing means may then determine which lane the host vehicle will occupy when it has travelled the distance to the target object by projecting the path estimated by the path estimation means with the lane boundary information at that distance. The host vehicle may then be placed in the appropriate lane by fitting the projected path to the observed lane boundaries at that point.

The target vehicle detection apparatus may comprise an emitter which emits a signal outward in front of the vehicle and a receiver which is adapted to receive a portion of the emitted signal reflected from objects in front of the vehicle, and a target processing means which is adapted to determine the distance between the host vehicle and the object.

The emitter and the receiver preferably emit and receive radar signals or lidar signals. Of course, other range finding technology may be employed in this application if preferred. The distance between the host vehicle and a target vehicle or object may be determined by the processing means based upon the time of flight of a signal from emission of the signal to receipt of a reflected portion of the signal.

It will be appreciated that the provision of apparatus for identifying the location of a target object can be used as part of many types of vehicle control systems.

Thus, in accordance with a second aspect the invention provides an adaptive criuse control system for a host vehicle comprising:

sensing apparatus according to the first aspect of the invention adapted to estimate the position of a target vehicle or object on a highway; and

signal generating means adapted to generate a steering bias signal which when applied to a steering system of the host vehicle assists in controlling the direction of the vehicle so as to cause the host vehicle to track the target vehicle.

The signal generating means may further generate at least one vehicle speed control signal which when applied to a brake system or a throttle control system of the vehicle causes the vehicle to maintain a predetermined distance behind the impending vehicle.

The vehicle steering and or braking and or throttle signals may be generated in response to the estimate of the target position determined by the sensing apparatus. The control signals may only be generated for target vehicles that occupy the projected path of the host vehicle, i.e. are in the same lane.

There will now be described by way of example only one embodiment of the present invention with reference to the accompanying drawings of which:

Figure 1 is an illustration of the relationship between a target vehicle and a host vehicle when the host vehicle is travelling (a) into a bend, (b) out of a bend and (c) when changing lanes;

Figure 2 is a simple geometrical illustration of the relationship between the host vehicle and the target vehicle;

Figure 3 is a flow chart illustrating a first method of estimating the target lane position for the host vehicle;

Figure 4 is a flow chart illustrating a second method of estimating the target lane position for the host vehicle;

Figure 5 is a flow diagram providing an overview of the strategy implemented by the sensor apparatus of the present invention when estimating target vehicle location; and

Figure 6 is an overview of the components of the system for the present invention.

As described hereinbefore the prior art approach to curvature prediction for a vehicles projected path has employed yaw rate measurements together with measurements of a vehicles speed.

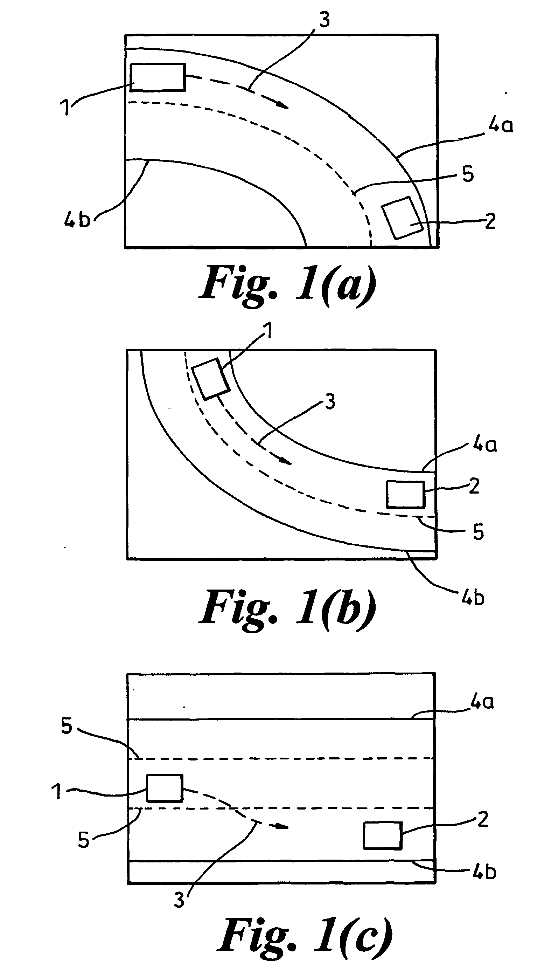

This approach is adequate for the majority of road situations in which ACC is expected to operate. However, when the complexity of the road environment increases the result can be that incorrect "targets" are selected. By target we mean either an impending vehicle or an object such in the path of the host vehicle. These complex situations are typically encountered at the entry and exit of bends and during lane change manoeuvres as illustrated in Figures 1(a), 1(b)and 1(c)respectively of the accompanying drawings. In each drawing, the host vehicle is indicated by the numeral 1 and the target vehicle by the numeral 2. The dotted-dashed line 3 illustrates the projected path of the host vehicle, with the solid lines 4a,4b indicating the road edges and the dashed line 5 a lane boundary.

The system of the present invention improves on the prior art by providing for an image capture apparatus to detect the location of lane boundaries relative to the host vehicle. This can be used to determine information relating to the position of the host vehicle relative to the lane boundaries, the lane width and the heading of the vehicle relative to the lane in order to estimate a projected trajectory for the vehicle.

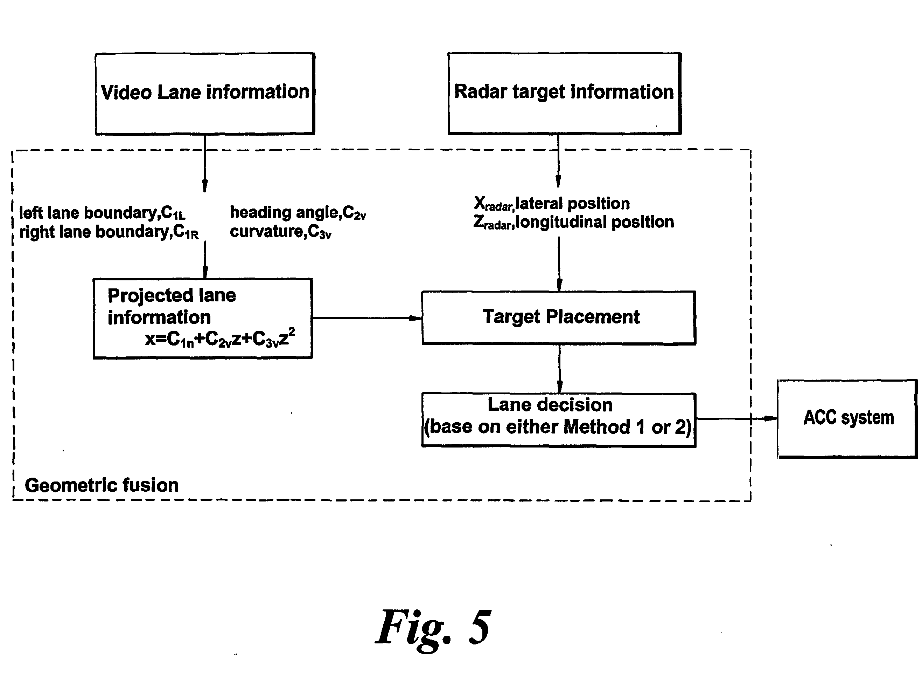

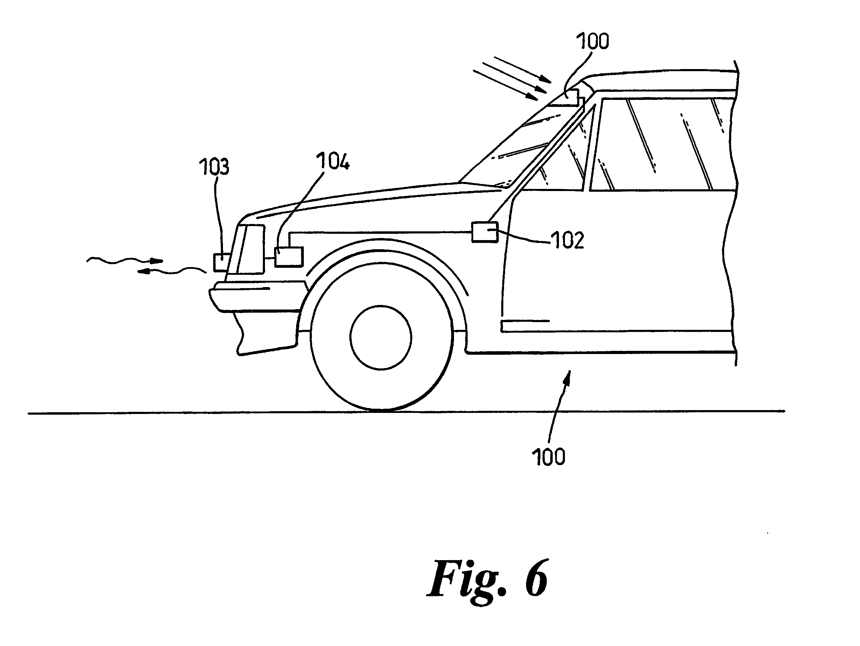

The apparatus required to implement the system is illustrated in Figure 6 of the accompanying drawings. In its simplest form comprises a video camera 100 mounted to the front of a host vehicle 101 and an image processing board. The image processing board captures images from the camera in real time. A radar or lidar type sensor 103 is also mounted to the front of the vehicle 101 which provides object identification and also allows the distance of the detected objects from the host vehicle 101 to be determined together with the bearing of the object relative to the host vehicle. The output of the radar sensor 103 and the image processing board 102 is passed to a data processor 104 located within the vehicle which combines or fuses the image and object detection data as illustrated in the general flow diagram of Figure 5 of the accompanying drawings.

The data processor performs both low level imaging processing and also higher level processing functions.

The data processor implements software algorithms employed in the lane detection system comprising the following:

- A feature point detection routine to extract the lane markings from the captured image scene, preferably using an edge detection algorithm to identify lines and curves in the scene

- A transformation algorithm that converts the edge detected points in the image from the image plane into the real world plane. The transformation is based around an inverse perspective transform that can be expressed (equation 1 below) as:

$$x = \frac{hX}{H-Y} \quad \text{and} \quad z = \frac{fh}{H-Y} \qquad (1)$$

where X and Y are the image co-ordinates referenced from the centre of the bottom line of the captured image, H is the horizon, f is the focal length of the capture camera, h is the height of the camera above the ground, and x, z are the real world co-ordinates. The z co-ordinate represents the distance in the real world ahead of the host vehicle.

A tracking algorithm, which uses an adapted recursive least-squares technique in the estimation of the lane model parameters. This lane model has a second order relationship and can be described (equation 2 below) as:

$$x = c_1 + c_2 z + c_3 z^2 \qquad (2)$$

where $C_1$ corresponds to the left/right lane marking offset, $C_2$ is the lane heading angle and $C_3$ is twice the lane curvature.

The output from the data processor following application of these algorithms (or other processing) to the captured image is transmitted over a data bus to a secondary data processing unit. This data fully describes the road on which the host vehicle is travelling and includes one or more of the following parameters

**Road curvature**

This provides a preview of the road ahead, and is important for correct target placement during bend-in and bend-out situations.

**Lane offsets**

The left and right offsets allow the calculation of the lane width and the vehicles lane position. The lane width may vary considerably from lane to lane ( for example some US highways and road works). The vehicles position in the lane can be used to determine whether or not the driver intends to change lane.

**Heading angle**

This can be used in conjunction with the vehicles lane position for predicting the drivers lane manoeuvre intentions.

**Confidence level**

A measure of the confidence of the lane parameter estimation is also calculated and transmitted via the bus to the secondary processor. This calculation is based on the variance associated with the parameter estimation. The confidence level is particularly important in the event that lane markings have deteriorated or the road layout is very complicated. If a low confidence level is indicated the system may switch to an alternative strategy for target selection.

The secondary processor fuses together the data describing the road layout with data obtained from the vehicle identification sensor(s) in real time. This enables it to be integrated within ACC or other driver assistance systems.

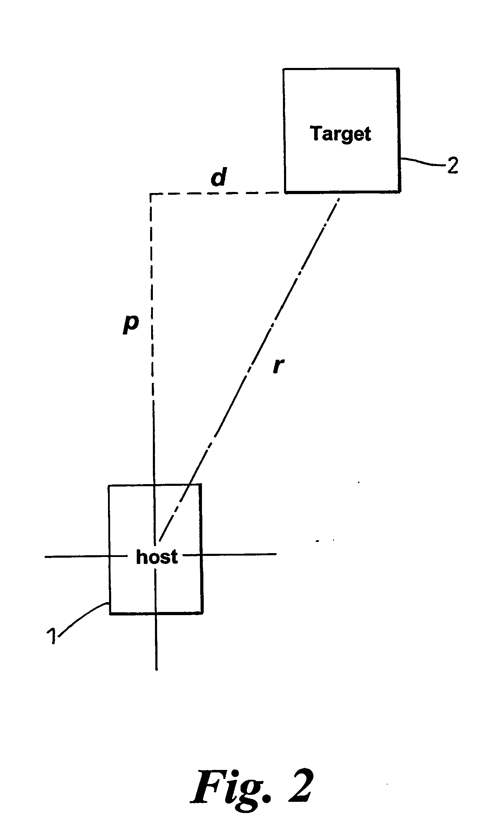

The fusion of the two types of data can best be understood with reference to Figure 2 of the accompanying drawings. This shows a atypical situation with a host vehicle negotiating a curve. Using the small angle approximation, the obstacle information can be combined with the lane curvature information to obtain a better target placement.

The information required to do this is the range (r) and the lateral distance from the host to a detected object. Using these parameters the perpendicular distance, p(m) at the centre of the vehicle can be calculated (according to equation 3) as:

$$p = \sqrt{\left(r^2 - d^2\right)}$$

The left and the right lane markings of the target, $x_1$ and $x_r$ can be calculated by applying equation 2 for the right and the left hand lane markings respectively using the distance determined using equation 3.

Using the values of $x_r$ and $x_1$, the target vehicle position offset from the predicted host vehicle centre ( using the projected path) is calculated with the lateral distance and the left and right target lane markings $X_L$ and $X_R$. The targets can then be placed in the correct lane.

This technique described in the preceding paragraphs deals with the case where the host vehicle is assumed to be staying in the same lane along its projected path. If the projected path of the vehicle takes it into a different lane then one or both of two possible methods may be applied.

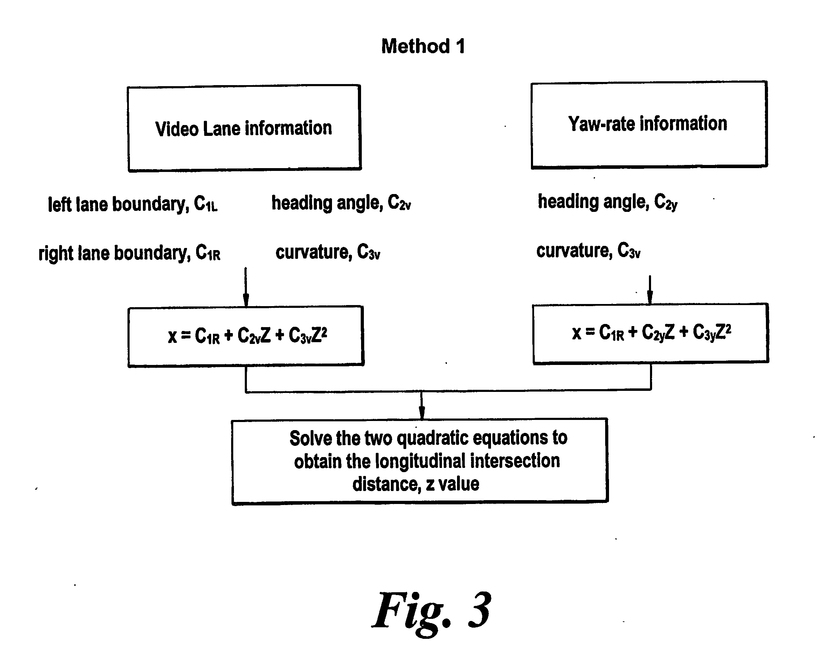

In the first method (shown in the flow diagram of Figure 3 of the accompanying drawings) additional information is obtained from a yaw sensor which measures the rate of yaw of the vehicle. This is used to determine a radius of curvature for the vehicle. This is projected to the target distance and the point of intersection of this path with the projected lane markings at the target distance is used to determine the lane in which the host vehicle will be located. This selected lane is then used as in the preceding paragraphs in comparison with the radar data to select the correct lane for the target vehicle.

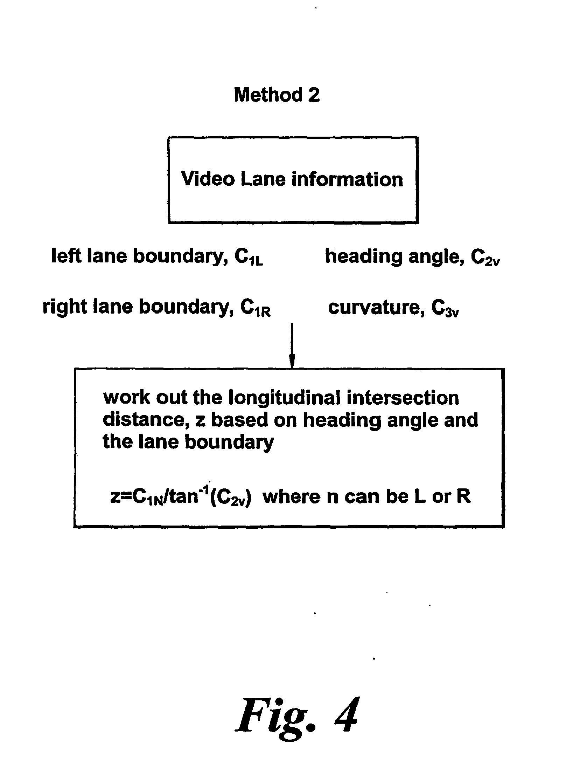

In a second method, illustrated in the flow chart of Figure 4 of the accompanying drawings the heading angle of the vehicle relative to the lane boundaries when the image is captured may be used. Again, this can be projected onto the lane boundaries at the distance of the target to determine the lane in which the host vehicle will be located.

With the first method a high quality yaw signal is needed for acceptable accuracy. In general, an affordable yaw sensor can not provide this as it suffers from noise and drift problems. Furthermore it is also sensitive to disturbance induced by the driver, reacts slowly to a bend and recovers slowly after coming out of a bend.

Conversely, the video information is less affected by disturbance from the driver and so is preferred in some applications to apply the second method in preference to the first. Nevertheless, both methods fall within the scope of the present invention.

In summary it will be appreciated that the present invention provides for an enhanced estimation of the position of a target object in the path of a host vehicle by combining actual target position information with lane marking data obtained from a video camera. The video information allows the lane in which the host vehicle is expected to be located when it reaches the target to be estimated. comparing the markings for this lane with the measured target position the actual lane in which the target is located can be estimated.

It will also be understood that the identification of the location of the target device permits the apparatus to be incorporated into a range of drive assistance systems such as adaptive cruise control.

## Claims

1. A target object position sensing apparatus for a host vehicle (1), the apparatus comprising:

   a lane detection apparatus provided on the host vehicle which includes an image acquisition means (100) adapted to capture an image of at least a part of the road ahead of the host vehicle (1);
   a vehicle path estimation means adapted to estimate a projected path for the host vehicle (1):
   a target vehicle detection apparatus (103) located on the host vehicle which is adapted to identify the position of any target objects located on the road ahead of the host vehicle, the position including data representing the distance of a target vehicle (2) from the host vehicle;
   first data processing means (104) adapted to determine a target lane in which the host vehicle will be located: and second processing means (104) adapted to compare the position of the target vehicle determined by the target vehicle detection means with the position of the target lane to provide a processed estimate of the actual position of the target object,
   **characterised by** the first data processing means being adapted to determine the target lane as the lane in which the host vehicle will be located when the host vehicle has travelled along the projected path by the distance to the target object and the processed estimate comprising an indicator of whether or not the, target vehicle (2) is in the same lane as the host vehicle (1) is projected to be in when at the point of the target vehicle (2).

2. The apparatus of Claim 1, in which the image acquisition means (100) of the lane detection apparatus comprises a video camera which is adapted to produce at least one two-dimensional image of an area of the road in front of the host vehicle (1).

3. The apparatus of any preceding claim in which the or each captured image is passed to an image processing unit (102).

4. The apparatus of Claim 3 in which the image processing unit (102) is adapted to filter the or each image to identify artefacts in the image corresponding to at least one of the right hand edge of a road (46), the left hand edge of the road (49), lane markings (5) defining lanes in the road, the radius of curvature of the lanes and the road, and the heading angles of the host vehicle (1) relative to the road and lanes.

5. The apparatus of Claim 3 or Claim 4 in which the image processing unit (102) is further adapted to perform a transformation algorithm, to convert the edge detected pointing of the lane boundaries from the image plane to the real world plane.

6. The apparatus of any one of Claims 3 to 5 in which the image processing unit (102) is adapted to apply an edge detection algorithm to the or each image to detect lines or curves that correspond to lane boundaries (5).

7. The apparatus of Claim 6 in which the image processing unit (102) is adapted to perform a tracking algorithm which employs a recursive least squares technique to identify the path of lanes (5) in the or each image.

8. The apparatus of any one of Claims 6 or 7 in which the output of the image processing unit (102) comprises data representing lane topography which is passed to the first data processing means (104) ,

9. The apparatus of Claim 8 in which the output of the image processing unit (102) also includes information including the position of the host vehicle (1) relative to the identified lanes and its heading.

10. The apparatus of any one of Claims 6 to 9 in which the first data processing means (104) is adapted to determine which lane the host vehicle (1) will occupy when it has travelled the distance to a target object by projecting the path estimated by the vehicle path estimation means with lane boundary information at that distance.

11. The apparatus of any one of Claims 6 to 10 in which the vehicle path estimation means (104) is adapted to use lane information to determine which lane the host vehicle (1) is presently travelling in.

12. The apparatus of any previous claim in which the vehicle path estimation means (104) estimates the path by projecting a path based upon the heading of the host vehicle (1).

13. The apparatus of Claim 11 in which the projected path corresponds to the path of the lane.

14. The apparatus of Claim 11 in which the vehicle path estimation means (104) is adapted to predict that, if the processed image indicates that the host vehicle (1) is towards a given side of a lane and heading towards that given side relative to the road the path estimation means may predict that the path of the host vehicle will continue for a short while to stay in that lane but will shortly change to a different lane to the given side.

15. The apparatus of any preceding claim in which the vehicle path estimation means (104) includes a yaw sensor which is adapted to determine the rate of yaw of the host vehicle (1) in order to provide a measure of the radius of curvature of the path a vehicle is following.

16. The apparatus of any preceding claim in which the target vehicle detection apparatus (103) comprises an emitter which emits a signal outward in front of the host vehicle (1) and a receiver which is adapted to receive a portion of the emitted signal reflected from objects in front of the vehicle, and a target processing means which is adapted to determine the distance between the host vehicle and the object.

17. The apparatus of Claim 16 in which the emitter and the receiver emit and receive one of radar signals and lidar signals.

18. The apparatus of Claim 16 or Claim 17 in which the distance between the host vehicle (1) and a target vehicle (7) or object is determined by the target processing means based upon the time of flight of a signal from emission of the signal to receipt of a reflected portion of the signal.

19. An adaptive cruise control system for a host vehicle (1) comprising:

    sensing apparatus according to any preceding claim and signal generating means adapted to generate a steering bias signal which when applied to a steering system of the vehicle assists in controlling the direction of the vehicle so as to cause the host vehicle to track the target vehicle.

**20.** The control system of Claim 19 in which the signal generating means generates at least one vehicle speed control signal which when applied to a brake system or a throttle control system of the vehicle cause the vehicle (1) to maintain a predetermined distance behind a target vehicle (2).

**21.** The control system of Claim 19 or Claim 20 in which at least one of the signals is generated in response to the estimate of the target position determined by the sensing apparatus.

**22.** The control system of any one of Claims 19 to 21 in which the control signals are only be generated for target vehicles that occupy the projected path of the host vehicle (1).

**Patentansprüche**

**1.** Zielobjektpositionserfassungsvorrichtung für ein Stammfahrzeug (1), wobei die Vorrichtung umfasst:

- eine an dem Stammfahrzeug vorhandene Fahrspurdetektionsvorrichtung, die eine Bilderfassungseinrichtung (100) umfasst, die ein Bild von zumindest einem Teil der vor dem Stammfahrzeug (1) liegenden Straße zu erfassen vermag;
- eine Fahrzeugwegschätzeinrichtung, die einen projizierten Weg für das Stammfahrzeug (1) zu schätzen vermag;
- eine sich an dem Stammfahrzeug befindende Zielfahrzeugdetektionsvorrichtung (103), die die Position eines beliebigen Zielobjekts zu identifizieren vermag, das sich auf der vor dem Stammfahrzeug liegenden Straße befindet, wobei die Position Daten umfasst, die den Abstand eines Zielfahrzeugs (2) von dem Stammfahrzeug repräsentieren;
- erste Datenverarbeitungsmittel (104), die eine Zielfahrspur zu bestimmen vermögen, auf der sich das Stammfahrzeug befinden wird;
- und zweite Verarbeitungsmittel (104), die die Position des Zielfahrzeugs, die durch die Zielfahrzeugdetektionsmittel bestimmt ist, mit der Position der Zielfahrspur vergleichen können, um eine verarbeitete Schätzung der tatsächlichen Position des Zielobjektes zur Verfügung zu stellen,

**dadurch gekennzeichnet, dass** die ersten Datenverarbeitungsmittel dazu ausgelegt sind, die Zielfahrspur als diejenige Fahrspur zu bestimmen, auf der sich das Stammfahrzeug befinden wird, wenn sich das Stammfahrzeug entlang des projizierten Weges um den Abstand zu dem Zielobjekt bewegt hat, und dass die verarbeitete Schätzung einen Indikator umfasst, ob das Zielfahrzeug (2) auf der gleichen Fahrspur ist oder nicht, auf der das Stammfahrzeug (1) projektionsgemäß sein wird, wenn es sich an dem Punkt des Zielfahrzeugs (2) befindet.

**2.** Vorrichtung nach Anspruch 1, bei der die Bilderfassungseinrichtung (100) der Fahrspurdetektionsvorrichtung eine Videokamera umfasst, die zumindest ein zweidimensionales Bild eines Bereiches der Straße vor dem Stammfahrzeug (1) zu erzeugen vermag.

**3.** Vorrichtung nach einem der vorhergehenden Ansprüche, bei der das oder jedes erfasste Bild an eine Bildverarbeitungseinheit (102) weitergeleitet wird.

**4.** Vorrichtung nach Anspruch 3, bei der die Bildverarbeitungseinheit (102) das oder jedes Bild zu filtern vermag, um Artefakte in dem Bild zu identifizieren, die dem rechten Rand der Straße (46), dem linken Rand der Straße (49), den Fahrspuren auf der Straße definierenden Fahrspurmarkierungen (5), dem Krümmungsradius der Fahrspuren und der Straße und/oder den Fahrtrichtungswinkeln des Stammfahrzeugs (1) relativ zu der Straße und den Fahrspuren entsprechen.

**5.** Vorrichtung nach Anspruch 3 oder 4, bei der die Bildverarbeitungseinheit (102) ferner einen Transformationsalgorithmus durchzuführen vermag, um die kantendetektierte Richtung der Fahrspurbegrenzungen von der Bildebene in die Ebene der realen Welt zu konvertieren.

**6.** Vorrichtung nach einem der Ansprüche 3 bis 5, bei der die Bildverarbeitungseinheit (102) einen Kantendetektionsalgorithmus auf das oder jedes Bild anzuwenden vermag, um Linien oder Kurven zu detektieren, die den Fahrspurbegrenzungen (5) entsprechen.

**7.** Vorrichtung nach Anspruch 6, bei der die Bildverarbeitungseinheit (102) einen Verfolgungsalgorithmus durchzuführen vermag, der eine rekursive Kleinste-Quadrate-Technik verwendet, um den Weg der Fahrspuren (5) in dem oder jedem Bild zu identifizieren.

8. Vorrichtung nach einem der Ansprüche 6 oder 7, bei der die Ausgabe der Bildverarbeitungseinheit (102) Daten umfasst, die die Fahrspurtopographie repräsentieren, die an die ersten Datenverarbeitungsmittel (104) weitergeleitet wird.

9. Vorrichtung nach Anspruch 8, bei der die Ausgabe der Bildverarbeitungseinheit (102) auch Informationen umfasst, die die Position des Stammfahrzeugs (1) relativ zu den identifizierten Fahrspuren und seiner Fahrtrichtung umfasst.

10. Vorrichtung nach einem der Ansprüche 6 bis 9, bei der die ersten Datenverarbeitungsmittel (104) zu bestimmen vermögen, welche Fahrspur das Stammfahrzeug (1) belegen wird, wenn es sich um den Abstand zu einem Zielobjekt fortbewegt hat, indem der durch die Fahrzeugwegschätzeinrichtung geschätzte Weg mit den Fahrspurbegrenzungsinformationen bei diesem Abstand projiziert wird.

11. Vorrichtung nach einem der Ansprüche 6 bis 10, bei der die Fahrzeugwegschätzeinrichtung (104) dazu ausgelegt ist, Fahrspurinformationen zu verwenden, um zu bestimmen, auf welcher Fahrspur sich das Stammfahrzeug (1) momentan fortbewegt.

12. Vorrichtung nach einem der vorhergehenden Ansprüche, bei der die Fahrzeugwegschätzeinrichtung (104) den Weg schätzt, indem ein Weg auf der Basis der Fahrtrichtung des Stammfahrzeugs (1) projiziert wird.

13. Vorrichtung nach Anspruch 11, bei der der projizierte Weg der Bahn der Fahrspur entspricht.

14. Vorrichtung nach Anspruch 11, bei der die Fahrzeugwegschätzeinrichtung (104) vorherzusagen vermag, dass, wenn das verarbeitete Bild anzeigt, dass das Stammfahrzeug (1) sich nahe einer gegebenen Seite einer Fahrspur befindet und sich in Richtung dieser gegebenen Seite relativ zu der Straße bewegt, die Wegschätzeinrichtung vorhersagen kann, dass der Weg des Stammfahrzeugs für eine kurze Zeit weiterlaufen wird, um in dieser Fahrspur zu bleiben, sich aber in Kürze auf eine andere Fahrspur auf der gegebenen Seite verändern wird.

15. Vorrichtung nach einem der vorhergehenden Ansprüche, bei der die Fahrzeugwegschätzeinrichtung (104) einen Giersensor umfasst, der die Gierrate des Stammfahrzeugs (1) zu bestimmen vermag, um ein Maß für den Radius einer Krümmung einer Bahn, der ein Fahrzeug folgt, zur Verfügung zu stellen.

16. Vorrichtung nach einem der vorhergehenden Ansprüche, bei der die Zielfahrzeugdetektionsvorrichtung (103) einen Sender, der vor dem Stammfahrzeug (1) ein Signal nach außen emittiert und einen Empfänger, der dazu ausgelegt ist, einen Teil des emittierten Signals, das von Objekten vor dem Fahrzeug reflektiert wird, zu empfangen und Zielverarbeitungsmittel umfasst, die den Abstand zwischen dem Stammfahrzeug und dem Objekt zu bestimmen vermögen.

17. Vorrichtung nach Anspruch 16, bei der der Sender und der Empfänger Radarsignale oder Lidar-Signale emittieren und empfangen.

18. Vorrichtung nach Anspruch 16 oder 17, bei der der Abstand zwischen dem-Stammfahrzeug (1) und einem Zielfahrzeug (7) oder einem Objekt durch die Zielverarbeitungsmittel auf der Basis der Laufzeit eines Signals von der Emission des Signals zum Empfang eines reflektierten Teils des Signals bestimmt wird.

19. Adaptives Geschwindigkeitssteuersystem für ein Stammfahrzeug (1), mit:

    - einer Sensiervorrichtung nach einem der vorhergehenden Ansprüche und Signalerzeugungsmitteln, die ein Lenkungsvorspannungssignal zu erzeugen vermögen, das, wenn es an ein Lenkungssystem des Fahrzeugs angelegt wird, das Steuern der Richtung des Fahrzeugs in solcher Weise unterstützt, dass das Stammfahrzeug dem Zielfahrzeug folgt.

20. Steuersystem nach Anspruch 19, bei dem die Signalerzeugungsmittel zumindest ein Fahrzeuggeschwindigkeitssteuersignal erzeugen, das, wenn es an ein Bremssystem oder ein Gaspedalsteuersystem des Fahrzeugs angelegt wird, bewirkt, dass das Fahrzeug (1) einen vorherbestimmten Abstand hinter einem Zielfahrzeug (2) aufrechterhält.

**21.** Steuersystem nach Anspruch 19 oder 20, bei dem zumindest eines der Signale in Abhängigkeit von der Schätzung der Zielposition erzeugt wird, die von der Erfassungsvorrichtung bestimmt wird.

**22.** Steuersystem nach einem der Ansprüche 19 bis 21, bei dem die Steuersignale nur für Zielfahrzeuge erzeugt werden, die den projizierten Weg des Stammfahrzeugs (1) belegen.

**Revendications**

**1.** Appareil dé détection de position d'objet cible pour un véhicule hôte (1), l'appareil comprenant :

un appareil de détection de voie de circulation prévu sur le véhicule hôte et comprenant un moyen d'acquisition d'image (100) adapté pour capturer une image d'au moins une partie de la route devant le véhicule hôte (1) ;
un moyen d'estimation de trajet de véhicule adapté pour estimer un trajet projeté pour le véhicule hôte (1) ;
un appareil de détection de véhicule cible (103) situé sur le véhicule hôte qui est adapté pour identifier la position de tout objet cible situé sur la route devant le véhicule hôte, la position comprenant des données représentant la distance entre un véhicule cible (2) et le véhicule hôte ;
un premier moyen de traitement de données (104) adapté pour déterminer une voie de circulation cible dans laquelle le véhicule hôte sera situé ; et
un deuxième moyen de traitement (104) adapté pour comparer la position du véhicule cible déterminée par le moyen de détection de véhicule cible avec la position de la voie de circulation cible afin de fournir une estimation traitée de la position réelle de l'objet cible,
**caractérisé en ce que** le premier moyen de traitement de données est adapté pour déterminer la voie de circulation cible comme étant la voie de circulation dans laquelle le véhicule hôte sera situé lorsque le véhicule hôte aura parcouru le long du trajet projeté la distance le séparant de l'objet cible, et **en ce que** l'estimation traitée comprend un indicateur indiquant si oui ou non le véhicule cible (2) se trouve dans la même voie de circulation où il est prévu que le véhicule hôte (1) se trouve à la position du véhicule cible (2).

**2.** Appareil selon la revendication 1, dans lequel le moyen d'acquisition d'image (100) de l'appareil de détection de voie de circulation comprend une caméra vidéo qui est adaptée pour produire au moins une image bidimensionnelle d'une surface de la route en avant du véhicule hôte (1).

**3.** Appareil selon l'une quelconque des revendications précédentes, dans lequel l'image capturée ou chaque image capturée est transmise à une unité de traitement d'image (102).

**4.** Appareil selon la revendication 3, dans lequel l'unité de traitement d'image (102) est adaptée pour filtrer l'image ou chaque image afin d'identifier des artefacts dans l'image correspondant à au moins un élément parmi le bord droit (46) d'une route, le bord gauche (49) de la route, des marquages de voie de circulation (5) définissant des voies de circulation sur la route, le rayon de courbure des voies de circulation et de la route, et les angles de cap du véhicule hôte (1) par rapport à la route et aux voies de circulation.

**5.** Appareil selon la revendication 3 ou la revendication 4, dans lequel l'unité de traitement d'image (102) est en outre adaptée pour exécuter un algorithme de transformation afin de convertir le pointage détecté des bords des limites des voies de circulation du plan d'image au plan du monde réel.

**6.** Appareil selon l'une quelconque des revendications 3 à 5, dans lequel l'unité de traitement d'image (102) est adaptée pour appliquer un algorithme de détection de bord à l'image ou à chaque image afin de détecter des lignes ou des courbes correspondant à des limites de voies de circulation (5).

**7.** Appareil selon la revendication 6, dans lequel l'unité de traitement d'image (102) est adaptée pour exécuter un algorithme de pistage employant une technique récursive des moindres carrés pour identifier le trajet des voies de circulation (5) dans l'image ou chaque image.

**8.** Appareil selon l'une quelconque des revendications 6 ou 7, dans lequel la sortie de l'unité de traitement d'image (102) comprend des données représentant une topographie de voies de circulation qui est transmise au premier moyen de traitement de données (104).

**9.** Appareil selon la revendication 8, dans lequel la sortie de l'unité de traitement d'image (102) comprend également des informations comprenant la position du véhicule hôte (1) par rapport aux voies de circulation identifiées et son cap.

10. Appareil selon l'une quelconque des revendications 6 à 9, dans lequel le premier moyen de traitement de données (104) est adapté pour déterminer la voie de circulation qui sera occupée par le véhicule hôte (1) lorsque celui-ci aura parcouru la distance jusqu'à un objet cible en projetant le trajet estimé par le moyen d'estimation de trajet de véhicule avec des informations de limites de voie de circulation à cette distance.

11. Appareil selon l'une quelconque des revendications 6 à 10, dans lequel le moyen d'estimation de trajet de véhicule (104) est adapté pour utiliser des informations de voie de circulation afin de déterminer sur quelle voie de circulation le véhicule hôte (1) est en train de circuler.

12. Appareil selon l'une quelconque des revendications précédentes, dans lequel le moyen d'estimation de trajet de véhicule (104) estime le trajet en projetant un trajet basé sur le cap du véhicule hôte (1).

13. Appareil selon la revendication 11, dans lequel le trajet projeté correspond au trajet de la voie de circulation.

14. Appareil selon la revendication 11, dans lequel le moyen d'estimation de trajet de véhicule (104) est adapté pour prévoir que, si l'image traitée indique que le véhicule hôte (1) se situe vers un côté donné d'une voie de circulation et se dirige vers ce côté donné par rapport à la route, le moyen d'estimation de trajet peut prévoir que le trajet du véhicule hôte continuera pendant un certain temps à rester sur cette voie de circulation, mais changera bientôt au profit d'une autre voie de circulation vers le côté donné.

15. Appareil selon l'une quelconque des revendications précédentes, dans lequel le moyen d'estimation de trajet de véhicule (104) comprend un capteur de lacet qui est adapté pour déterminer l'amplitude de lacet du véhicule hôte (1) en vue de fournir une mesure du rayon de courbure du trajet suivi par un véhicule.

16. Appareil selon l'une quelconque des revendications précédentes, dans lequel l'appareil de détection de véhicule cible (103) comprend un émetteur qui émet un signal vers l'extérieur devant le véhicule hôte (1) et un récepteur qui est adapté pour recevoir une partie du signal émis réfléchie par des objets situés devant le véhicule, et un moyen de traitement de cible qui est adapté pour déterminer la distance entre le véhicule hôte et l'objet.

17. Appareil selon la revendication 16, dans lequel l'émetteur et le récepteur émettent et reçoivent soit des signaux radars, soit des signaux lidars.

18. Appareil selon la revendication 16 ou la revendication 17, dans lequel la distance entre le véhicule hôte (1) et un véhicule ou objet cible (7) est déterminée par le moyen de traitement de cible sur la base de la durée de trajet d'un signal entre l'émission du signal et la réception d'une partie réfléchie du signal.

19. Système de régulateur de vitesse adaptatif pour un véhicule hôte (1), comprenant :

un appareil de détection selon l'une quelconque des revendications précédentes, et un moyen de génération de signal adapté pour générer un signal de poussée de direction qui, lorsqu'il est appliqué à un système de direction du véhicule, aide à commander la direction du véhicule de façon à entraîner le véhicule hôte à suivre le véhicule cible.

20. Système de commande selon la revendication 19, dans lequel le moyen de génération de signal génère au moins un signal de commande de vitesse de véhicule qui, lorsqu'il est appliqué à un système de freinage ou à un système de commande d'étranglement du véhicule, entraîne le véhicule (1) à maintenir une distance prédéterminée derrière un véhicule cible (2).

21. Système de commande selon la revendication 19 ou la revendication 20, dans lequel au moins un des signaux est généré en réponse à l'estimation de la position cible déterminée par l'appareil de détection.

22. Système de commande selon l'une quelconque des revendications 19 à 21, dans lequel les signaux de commande sont générés uniquement pour des véhicules cibles qui occupent le trajet projeté du véhicule hôte (1).

*Fig. 1(a)*

*Fig. 1(b)*

*Fig. 1(c)*

*Fig. 2*

## Method 1

| Video Lane information |
| :---: |

| Yaw-rate information |
| :---: |

left lane boundary, $C_{1L}$    heading angle, $C_{2v}$    heading angle, $C_{2y}$

right lane boundary, $C_{1R}$    curvature, $C_{3v}$    curvature, $C_{3v}$

$$x = C_{1R} + C_{2v}Z + C_{3v}Z^2$$

$$x = C_{1R} + C_{2y}Z + C_{3y}Z^2$$

Solve the two quadratic equations to obtain the longitudinal intersection distance, z value

*Fig. 3*

EP 1 395 851 B1

**Method 2**

Video Lane information

left lane boundary, $C_{1L}$          heading angle, $C_{2v}$

right lane boundary, $C_{1R}$          curvature, $C_{3v}$

work out the longitudinal intersection distance, z based on heading angle and the lane boundary

$z = C_{1N}/\tan^{-1}(C_{2v})$  where n can be L or R

## *Fig. 4*

```
┌─────────────────────────────┐          ┌─────────────────────────────┐
│   Video Lane information     │          │   Radar target information   │
└─────────────────────────────┘          └─────────────────────────────┘
              │                                          │
              ▼                                          ▼
```

left lane boundary,$C_{1L}$    heading angle,$C_{2v}$         $X_{radar}$,lateral position
right lane boundary,$C_{1R}$   curvature,$C_{3v}$            $Z_{radar}$,longitudinal position

```
              │                                          │
              ▼                                          ▼
┌─────────────────────────┐              ┌─────────────────────────────┐
│  Projected lane          │              │                             │
│  information             │─────────────▶│      Target Placement       │
│  x=C_{1n}+C_{2v}z+C_{3v}z^2 │              │                             │
└─────────────────────────┘              └─────────────────────────────┘
                                                        │
                                                        ▼
                                          ┌─────────────────────────────┐         ┌──────────────┐
                                          │      Lane decision           │────────▶│  ACC system  │
                                          │(base on either Method 1 or 2)│         │              │
                                          └─────────────────────────────┘         └──────────────┘
```

Projected lane information $x=C_{1n}+C_{2v}z+C_{3v}z^2$

Geometric fusion

*Fig. 5*

*Fig. 6*

EP 1 395 851 B1